# FASCICULE DE BREVET EUROPEEN

(11) **EP 2 380 933 B1**
(45) Date de publication et mention de la délivrance du brevet: **19.02.2020**
(21) Numéro de dépôt: 11161880.7
(22) Date de dépôt: 11.04.2011
(51) Int. Cl.: C08L 83/04, C08L 23/02, C08L 67/00, C08L 75/00, C08L 77/00, C08L 79/08, B29B 7/46

(54) **ELASTOMÈRE RÉTICULÉ À TRANSFORMATION THERMOPLASTIQUE ET SON PROCÉDÉ DE PRÉPARATION.**
CROSS-LINKED ELASTOMER WITH THERMOPLASTIC TRANSFORMATION AND METHOD FOR PREPARING SAME
ELASTOMER MIT NETZSTRUKTUR MIT THERMOPLASTISCHER TRANSFORMATION, UND SEIN HERSTELLUNGSVERFAHREN

(30) Priorité: 21.04.2010 FR 1001697
(43) Date de publication de la demande: 26.10.2011
(73) Titulaire: HUTCHINSON, 75008 Paris (FR)
(72) Inventeur: Garois, Nicolas, 45200, AMILLY (FR); Sonntag, Philippe, 77850, HERICY (FR); Hong, Satha, 45200, MONTARGIS (FR); Martin, Grégory, 45700, VILLEMANDEUR (FR); Galpin, David, 45700, VIMORY (FR)
(74) Mandataire: Plasseraud IP

(56) Documents cités:
- WO-A1-03/035759
- WO-A1-03/035764
- WO-A1-2004/023026

## Description

La présente invention concerne un élastomère réticulé à transformation thermoplastique (« TPV ») de type comprenant deux phases respectivement thermoplastique et élastomère silicone liquide (« LSR »), et son procédé de préparation.

Les élastomères silicones réticulés à transformation thermoplastique, encore appelés « TPSiV » en abrégé pour « ThermoPlastic Silicone Vulcanizates » en anglais (i.e. vulcanisats de silicone thermoplastiques) sont formés de manière connue par réticulation dynamique d'une phase silicone par exemple de type liquide bi-composants (« LSR » pour « Liquid Silicone Rubber » en anglais) en présence d'une phase thermoplastique. On peut par exemple citer les documents US-A-6 013 715, EP-B1-1 440 122, WO 03/035759 A1 et US-B1-6 569 958 pour l'obtention par extrusion réactive de tels « TPSiV », dont la morphologie est toujours telle que la phase thermoplastique du « TPSiV » est continue dans le mélange finalement obtenu. Quant à la phase silicone de chacun de ces « TPSiV », elle est le plus souvent discontinue dans ce mélange, étant dispersée dans cette phase continue thermoplastique, ou bien en variante co-continue avec cette dernière comme mentionné dans le document EP-B1-1 440 122 précité.

WO 2004/023026 A1 divulgue un matériau élastomère thermoplastique qui comprend un produit de réaction de:
(a) au moins une résine polyamide;
(b) une gomme de diorganopolysiloxane;
(c) un compatibilisant choisi parmi (i) un agent de couplage, (ii) un diorganopolysiloxane fonctionnel ou (iii) un copolymère à au moins un bloc diorganopolysiloxane et un bloc choisi parmi un polyamide, un polyéther, un polyuréthanne, une polyurée, un polycarbonate ou un polyacrylate;
(d) un composé organohydrido-silicium; et
(e) un catalyseur d'hydrosilylation.

Un inconvénient majeur de ces « TPSiV » connus à ce jour réside dans le fait que leur morphologie n'est apparemment jamais constituée d'une unique phase continue de silicone liquide dans laquelle est dispersée la phase thermoplastique, et également dans le fait que la finesse et l'homogénéité de la dispersion obtenue d'une phase dans l'autre sont insatisfaisantes. Il en résulte que certaines propriétés mécaniques de ces « TPSiV » laissent à désirer.

Un but de la présente invention est de remédier à cet inconvénient, et ce but est atteint en ce que la Demanderesse vient de découvrir d'une manière surprenante que si l'on injecte dans une extrudeuse bi-vis, selon une séquence et des conditions de cisaillement et de température particulières, une phase thermoplastique, une phase silicone liquide, un système compatibilisant spécifique et une charge renforçante, alors on obtient par extrusion réactive un « TPV » dans lequel au moins la phase silicone est continue et dans lequel la phase thermoplastique peut y être dispersée avec une homogénéité et une finesse nettement améliorées par rapport aux « TPSiV » connus à base du ou des même(s) polymère(s) thermoplastique(s), ce qui permet d'améliorer de manière significative leur résistance à la rupture, au déchirement et leur déformation rémanente à la compression et en outre de rendre ces « TPV » selon l'invention complètement aptes à être à nouveau mis en œuvre et transformés sans pénaliser leurs propriétés.

Plus précisément, un élastomère réticulé à transformation thermoplastique selon l'invention est tel que défini à la revendication 1 annexée et comprend :
- une première phase à base d'au moins un polymère thermoplastique choisi dans le groupe constitué par les homopolymères et copolymères d'oléfines, les polyamides, les polyimides (PI), les polyphtalamides (PPA), les polyéther-imide (PEI), les polyamide-imide (PAI), les élastomères thermoplastiques (TPE) et leurs mélanges, ledit au moins un polymère thermoplastique étant compris dans l'élastomère réticulé à transformation thermoplastique selon une fraction massique allant de 20 % à 80 %,
- une seconde phase à base d'au moins un élastomère silicone liquide bi-composants réticulé par hydrosilylation qui comprend un premier composant comprenant un mélange de diorganopolysiloxanes, une silice renforçante et un catalyseur d'hydrosilylation à base de platine, et un second composant comprenant un diorganopolysiloxane, un composé organohydridosilicone, une silice renforçante et un inhibiteur, ledit au moins un élastomère silicone liquide étant compris dans l'élastomère réticulé à transformation thermoplastique selon une fraction massique allant de 20 % à 80 %, et
- un système compatibilisant spécifique de ces phases entre elles, caractérisé en ce que ledit système comprend :

- au moins un polymère choisi dans le groupe constitué par les polyoléfines greffées, les terpolymères à blocs poly(vinylaromatique-diène conjugué-méthacrylate de méthyle), les terpolymères à blocs poly(méthacrylate de méthyle-acrylate d'alkyle-méthacrylate de méthyle), les terpolymères éthylène-(meth)acrylate d'alkyle-acide acrylique et les polymères issus d'au moins un glycidyl ester tels que les terpolymères éthylène-(meth)acrylate-glycidyl (meth)acrylate, et
- un polyorganosiloxane à groupe(s) fonctionnel(s) SiH,
et en ce que ledit élastomère réticulé à tranformation thermoplastique forme une dispersion homogène desdites première et seconde phases obtenue par extrusion réactive avec au moins la seconde phase qui y est continue, ladite première phase étant une phase discontinue formée de nodules dispersés dans ladite seconde phase continue, ou bien les première et seconde phases étant co-continues dans ledit élastomère réticulé à tranformation thermoplastique sous forme de nodules de l'une contenus dans l'autre et inversement, ces nodules présentant dans ces deux cas une taille moyenne inférieure à 10 µm.

On notera que la Demanderesse a ainsi découvert que ce système compatibilisant, utilisé dans le cadre du procédé d'extrusion réactive précité permet, par une réduction de la tension interfaciale et par une amélioration de l'adhésion entre phases, de pallier de manière satisfaisante l'incompatibilité mutuelle des phases silicone et thermoplastique et donc d'améliorer sensiblement les propriétés mécaniques du « TPV » obtenu, en comparaison des « TPSiV » testés dans les documents précités US-A-6 013 715 et EP-B1-1 440 122 qui sont dépourvus de tout agent compatibilisant et dans le document US-B1-6 569 958 qui contiennent un agent compatibilisant de type copolymère d'un glycidyl ester.

Comme indiqué ci-dessus, ce « TPV » selon l'invention forme avantageusement un mélange homogène de ces première et seconde phases, avec au moins la seconde phase qui y est continue. En d'autres termes, la première phase peut être une phase discontinue formée de nodules dispersés dans la seconde phase continue, ou bien à la limite ces première et seconde phases peuvent être co-continues dans le mélange sous forme de nodules de l'une contenus dans l'autre et inversement, ces nodules présentant dans ces deux cas une taille moyenne inférieure à 10 µm et de préférence comprise entre 50 nm et 5 µm.

De préférence, ce « TPV » comprend le produit de la réaction, par cette extrusion réactive, dudit au moins un polymère thermoplastique et dudit polyorganosiloxane qui est présent en excès par rapport aux proportions stoechiométriques des deux composants du silicone liquide et qui présente lesdits groupes fonctionnels SiH, monovalents, à ses extrémités de chaîne ou le long de sa chaîne, ce polyorganosiloxane se greffant par cette réaction sur ledit au moins un polymère thermoplastique.

Egalement à titre préférentiel, ledit polymère inclus dans le système compatibilisant comprend ladite polyoléfine greffée, laquelle peut être choisie dans le groupe constitué par les homopolymères et copolymères d'oléfines et les copolymères d'au moins une oléfine et d'au moins un comonomère non oléfinique et, à titre encore plus préférentiel, dans le groupe constitué par les homopolymères d'une alpha-oléfine, tels que les polypropylènes, et les copolymères d'éthylène et d'un amide, et de préférence cette polyoléfine est greffée par de l'anhydride maléique.

En variante et comme indiqué précédemment, ledit polymère inclus dans le système compatibilisant peut être par exemple un terpolymère à blocs polystyrène/polybutadiène-1,4/polyméthacrylate de méthyle tel que celui de dénomination « SBM », un terpolymère à blocs polyméthacrylate de méthyle/polyacrylate de butyle/méthacrylate de méthyle tel que celui de dénomination « MAM », un terpolymère éthylène-acrylate de méthyle-acide acrylique tel que ceux de dénomination « ATX », ou encore un terpolymère éthylène/méthylacrylate/glycidyl méthacrylate, à titre non limitatif.

Avantageusement, un « TPV » selon l'invention peut comprendre ledit système compatibilisant selon une fraction massique allant de 1 % à 30 %, lequel système peut comprendre (en parties en poids pour 100 parties de polymère(s) thermoplastique(s) et d'élastomère(s) silicone(s) liquide(s)) :
- ledit polymère (comme par exemple ladite polyoléfine greffée) selon une quantité allant de 0,1 à 10 parties en poids,
- ledit polyorganosiloxane à groupe(s) fonctionnel(s) SiH selon une quantité allant de 0,1 à 2 parties en poids, et optionnellement
- un plastifiant, tel qu'une huile paraffinique, un plastifiant de type ester, phosphate ou un plastifiant sulfonamide par exemple, ce plastifiant étant choisi compatible avec lesdites première et seconde phases et étant présent selon une quantité allant de 0 à 20 parties en poids.

On peut noter que ces plastifiants de type ester ou phosphate conviennent notamment dans le cas où ledit au moins un polymère thermoplastique est un TPU.
dans un « TPV » selon l'invention, ledit au moins un polymère thermoplastique peut être choisi dans le groupe constitué par les polypropylènes isotactiques, les copolymères de propylène, les polyéthylènes haute densité, les polyéthylènes basse densité, les copolyesters (COPE), les polyéthers blocs amides (PEBA), les polyamides 6, les polyamides 4.6, les polyamides 6.6, les polyamides 11, les polyamides 12, les polyuréthannes thermoplastiques (TPU) et leurs mélanges.

Selon une autre caractéristique de l'invention, un « TPV » selon l'invention peut comprendre en outre, selon une fraction massique allant de 1 % à 30 %, une charge renforçante de ladite première et/ou de ladite seconde phase qui peut être toute charge compatible connue et qui est de préférence choisie dans le groupe constitué par les charges inorganiques telles que les silices pyrogénées hydrophobes, le dioxyde de titane et le talc, les charges organiques telles que le noir de carbone et le graphite, et leurs mélanges.

Un procédé de préparation selon l'invention d'un « TPV » tel que défini ci-dessus comprend une extrusion réactive, mise en œuvre en au moins une passe dans une extrudeuse bi-vis, d'un mélange comprenant lesdites première et seconde phases et ledit système compatibilisant.

Selon une autre caractéristique de ce procédé de l'invention, l'on introduit avant ladite seconde phase dans l'extrudeuse, ladite première phase, ledit système compatibilisant de préférence au moyen d'une pompe péristaltique, et une charge renforçante des première et/ou seconde phases.

De préférence, on introduit simultanément, en une zone d'alimentation de l'extrudeuse :
- la première phase,
- tout ou partie du système compatibilisant, et
- une charge renforçante des première et/ou seconde phases,
pour obtenir un pré-mélange que l'on fait réagir ensuite avec optionnellement la partie restante dudit système, puis avec la seconde phase.

Selon une autre caractéristique de ce procédé de l'invention, l'on mélange la seconde phase à la première phase par injection, dans une zone de dispersion de l'extrudeuse :
- dudit premier composant de cette seconde phase, puis
- dudit second composant de cette seconde phase.

De préférence, on mélange les première et seconde phases dans une zone de dispersion de l'extrudeuse, à une température supérieure d'au moins 20° C au point de fusion dudit polymère thermoplastique ou de celui desdits polymères thermoplastiques qui est le plus élevé, et avec un taux de cisaillement du mélange dans cette zone de dispersion qui est supérieur à 10² s⁻¹ et de préférence égal ou supérieur à 10³ s⁻¹.

Selon un mode préférentiel de réalisation de l'invention, l'on soumet à un traitement thermique le mélange formé de granulés qui est obtenu en sortie de l'extrudeuse, par exemple pendant plusieurs heures à une température comprise entre 100° C et 150° C, pour l'amélioration des propriétés mécaniques de ce mélange, telles que la résistance à la rupture, la résistance au déchirement et la déformation rémanente à la compression.

On notera que ce traitement thermique post-extrusion est optionnel, mais permet d'éviter une étape finale de recuit sur les pièces finies.

En résumé et comme indiqué précédemment, ces granulés obtenus par le système compatibilisant et par le procédé d'extrusion réactive de l'invention se caractérisent par une amélioration significative de ces propriétés, en comparaison de celles d'un « TPSiV » à base du ou des même(s) polymère(s) thermoplastique(s) dans lequel l'élastomère silicone forme une phase discontinue dispersée dans ce(s) polymère(s) thermoplastique(s).

De plus, les « TPV » selon l'invention ainsi obtenus peuvent être avantageusement mis en oeuvre et transformés comme des matières thermoplastiques et avec les avantages des élastomères silicones, et ils sont complètement aptes à être recyclés sans perte significative de leurs propriétés.

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les dessins joints, parmi lesquels :
la figure 1 est une vue latérale schématique d'une extrudeuse bi-vis illustrant une séquence d'injection des ingrédients principaux d'un « TPV » selon un mode préférentiel de mise en oeuvre de son procédé de préparation selon l'invention,
la figure 2 est une vue latérale schématique de la même extrudeuse illustrant en variante de la figure 1 une autre séquence d'injection possible des ingrédients d'un « TPV » selon l'invention,
la figure 3 est un cliché au microscope à force atomique illustrant la morphologie d'un « TPV » selon un premier exemple de l'invention dans lequel la phase thermoplastique est de type polyoléfinique,
la figure 4 est un cliché au microscope à force atomique illustrant à titre de premier exemple « témoin » la morphologie d'un « TPSiV » connu dans lequel la phase thermoplastique est également polyoléfinique,
la figure 5 est un cliché au microscope à force atomique illustrant la morphologie d'un « TPV » selon un deuxième exemple de l'invention dans lequel la phase thermoplastique est à base d'un polyamide, et
la figure 6 est un cliché au microscope à force atomique illustrant à titre de deuxième exemple « témoin » la morphologie d'un « TPSiV » connu dans lequel la phase thermoplastique est à base d'un tel polyamide.

Dans les exemples qui suivent, les conditions de mélangeage utilisées pour préparer les « TPV » selon l'invention ont été les suivantes.

On a utilisé une extrudeuse bi-vis co-rotative de dénomination « CLEXTRAL EVOLUM 32 » pour le mélangeage réactif en une seule passe des deux phases, du système compatibilisant et de la charge renforçante.

On a introduit dans l'extrudeuse le polyorganosiloxane à groupes SiH (de dénomination « H-Siloxane ») au moyen d'une pompe péristaltique, et les deux composants B1 et B2 de l'élastomère silicone (« LSR ») par une pompe « DOPAG ». Ce H-siloxane a été introduit en excès par rapport aux quantités stoechiométriques des composants B1 et B2.

Le temps de séjour de l'ensemble des composés dans l'extrudeuse était compris entre 1 min. et 2 min. pour l'ensemble des essais réalisés. Quant au taux de cisaillement y du mélange dans cette zone de dispersion, défini par la formule γ = u / h où u est la vitesse linéaire de rotation des vis (en m.s⁻¹) et h l'espacement entre ces vis (en m), il était toujours au moins égal à 10³ s⁻¹, ce qui représente un mélangeage très sévère en comparaison des taux de cisaillement usuels.

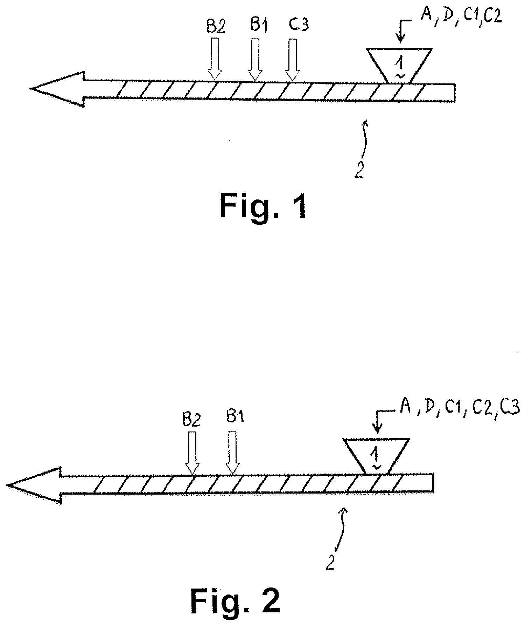

On a réalisé, dans le premier mode préférentiel de réalisation de l'invention illustré à la figure 1 ;
a) dans un premier temps, une introduction simultanée dans la trémie d'alimentation 1 de l'extrudeuse 2 de la phase thermoplastique A, de la charge renforçante D et d'une partie du système compatibilisant C comprenant la polyoléfine greffée C1 et le H-siloxane C2, pour l'obtention *in situ* d'un pré-mélange, puis
b) l'introduction dans une zone de transport de l'extrudeuse 2 du reste du système compatibilisant C constitué d'un plastifiant C3, puis
c) l'introduction dans une zone de dispersion de l'extrudeuse du premier composant B1 de la phase élastomère silicone liquide B (constitué d'un mélange de diorganopolysiloxanes, d'une silice renforçante et d'un catalyseur d'hydrosilylation à base de platine), puis enfin du second composant B2 de cette phase B (constitué d'un diorganopolysiloxane, d'un composé organohydridosilicone, d'une silice renforçante et d'un inhibiteur).

Dans le mode de réalisation de la figure 2, on a réalisé :
a) une introduction simultanée dans la trémie d'alimentation 1 de la phase thermoplastique A, de la charge renforçante D et de la totalité du système compatibilisant C comprenant la polyoléfine greffée C1, le H-siloxane C2 et le plastifiant éventuel C3, pour l'obtention *in situ* d'un pré-mélange, puis
b) l'introduction dans une zone de dispersion de l'extrudeuse 2 du composant B1 puis du composant B2 de la phase élastomère B.

Dans ces deux modes de réalisation, on a mis en œuvre le mélangeage à des températures supérieures de 20 à 30° C au moins à la température de fusion du ou de celui des polymères thermoplastiques de la phase A ayant le point de fusion le plus élevé, cette température de mélangeage dans la zone de dispersion de l'extrudeuse étant par exemple comprise entre 150 et 220° C et, de préférence, entre 160 et 200° C (ces températures sont ici données à titre d'exemple seulement dans le cas où l'on utilise soit un polypropylène, soit un TPU à titre de polymère thermoplastique pour la phase A).

Afin de stabiliser les vulcanisats thermoplastiques obtenus, on peut optionnellement réaliser une seconde passe pour chaque mélange dans l'extrudeuse en y ajoutant un système d'antioxydants, par exemple du type phénol / amine aromatique.

On a mesuré les propriétés mécaniques suivantes pour les vulcanisats thermoplastiques « témoin » et selon l'invention obtenus :
- duretés Shore A (15 s) et Shore D (3s),
- contrainte à la rupture R/R (MPa),
- allongement à la rupture A/R (%),
- résistance au déchirement DELFT (N/m),
- déformation rémanente à la compression DRC à 25 % (22 heures à 100° C), exprimée en %,
- module E' (MPa) à 20° C et à 100° C, et
- températures de transition vitreuse Tg (° C).

### 1/ Exemple 1 :

On a préparé selon le procédé de l'invention un premier vulcanisat thermoplastique « TPV 1 » en utilisant une phase A polyoléfinique à deux polymères et, à titre de système compatibilisant C entre cette phase A et la phase B, les trois composés C1, C2 et C3 précités introduits selon le premier mode de la figure 1. On a de plus soumis à un traitement thermique les granulés obtenus en sortie de l'extrudeuse pendant plusieurs heures et à une température comprise entre 100° C et 150° C.

**Tableau 1 :**

| Ingrédients du TPV 1 selon l'invention | Parties en poids pour 100 parties de polymères thermoplastiques et d'élastomère silicone |
|---|---|
| PPH3060 | 8,25 |
| (polypropylène) | |
| Vistamaxx 6202 | 19,25 |
| (copolymère éthylène-propylène) | |
| SL 7240 | 70 |
| (« LSR » bi-composants B1 et B2) | |
| EXXELOR PO 1020 | 2,5 |
| (polypropylène greffé anhydride maléique) | |
| Primol 352 | 10 |
| (huile blanche plastifiante) | |
| H-siloxane | 1 |
| Silice Aerosil R972 | 1 |
| TiO₂ | 5 |

On a mesuré les propriétés précitées de ce TPV 1 et on les a comparées au tableau 2 ci-dessous à celles d'un TPSiV « 5300 » de la société Multibase à base polyoléfinique (i.e. comprenant une phase thermoplastique analogue à celle de ce TPV 1).

**Tableau 2 :**

| | TPV 1 invention | TPSiV témoin « 5300 » |
|---|---|---|
| Dureté Shore A (15 s) | 58 | 59 |
| R/R (MPa) | 6,5 | 4,4 |
| A/R (%) | 235 | 275 |
| DELFT (N/m) | 20,7 | 10,8 |
| DRC à 25 % | 36 | 100 |
| 22 h à 100° C (%) | | |

| Module E' (MPa) : | | |
|---|---|---|
| à 20° C | 13 | 24 |
| à 100° C | 8,5 | 7,5 |
| Tg (° C) | -36 | -44 |

A duretés sensiblement égales, on note que la résistance à la rupture, la résistance au déchirement DELFT et la déformation rémanente à la compression à 100° C du TPV 1 selon l'invention sont très nettement supérieures aux mêmes propriétés mesurées sur un TPSiV disponible dans le commerce à base d'une phase polyoléfinique analogue.

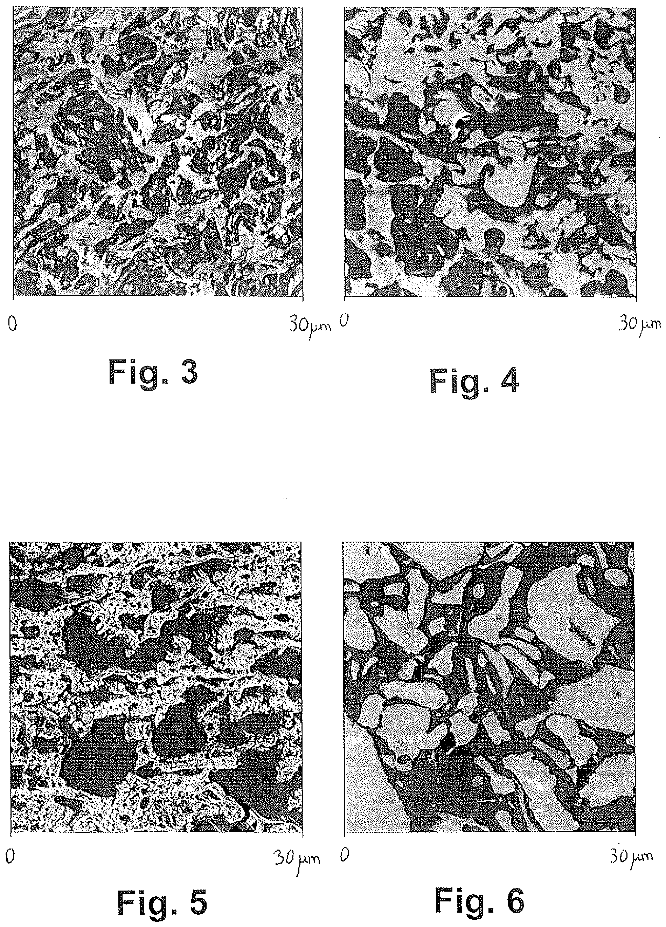

En effet et comme illustré sur les clichés des figures 3 et 4, ce TPV 1 présente une morphologie telle que les deux phases thermoplastique A (claire) et élastomère silicone B (foncée) sont co-continues (i.e. avec une dispersion dans chacune des phases A et B de nodules de B et A, respectivement), et l'on voit à la figure 3 que cette dispersion selon l'invention est beaucoup plus fine (avec des tailles moyennes de nodules comprises entre 1 µm et 2 µm environ) que celle qui caractérise les deux phases thermoplastique et silicone du TPSiV témoin « 5300 » à la figure 4.

### 2/ Exemple 2 :

On a préparé selon le procédé de l'invention un second vulcanisat thermoplastique « TPV 2 » en utilisant une phase A polyamide à un seul polymère et, à titre de système compatibilisant C entre cette phase A et la phase B (inchangée), les trois composés C1, C2 et C3 précités introduits selon le premier mode de la figure 1. On a de plus soumis à un traitement thermique les granulés obtenus en sortie de l'extrudeuse pendant plusieurs heures et à une température comprise entre 100° C et 150° C.

**Tableau 3 :**

| Ingrédients du TPV 2 selon l'invention | Parties en poids pour 100 parties de polymères thermoplastiques et d'élastomère silicone |
|---|---|
| Akulon F136DH | 60 |
| (polyamide PA 6) | |
| SL 7240 | 40 |
| (« LSR » bi-composants B1 et B2) | |
| Lotader X-LP21H | 5 |
| (copolymère amide-éthylène greffé anhydride maléique) | |
| Sibercizer PA100 | 15 |
| (plastifiant sulfonamide) | |
| H-siloxane | 1 |
| Silice Aerosil R972 | 1 |
| TiO₂ | 5 |

On a mesuré les propriétés précitées de ce TPV 2 et on les a comparées au tableau 4 ci-dessous à celles d'un TPSiV « 1180 » de la société Multibase à base polyamide (i.e. comprenant une phase thermoplastique analogue à celle de ce TPV 2).

**Tableau 4 :**

| | TPV 2 invention | TPSiV témoin « 1180 » |
|---|---|---|
| Dureté Shore D (3 s) | 49 | 44 |
| R/R (MPa) | 26,8 | 21 |
| A/R (%) | 170 | 210 |
| DELFT (N/m) | 59,8 | 48,6 |
| DRC à 25 % | 72 | 73 |
| 22 h à 100° C (%) | | |

| Module E' (MPa) : | | |
|---|---|---|
| à 20° C | 220 | 220 |
| à 100° C | 78 | 41 |
| Tg (° C) | 14,3 | -35 51 |

A duretés équivalentes, on note que les propriétés mécaniques du TPV 2 selon l'invention sont similaires à celles mesurées sur ce TPSiV connu à base d'une phase polyamide analogue, à l'exception toutefois des températures de transition vitreuse. En effet, ce TPV 2 ne présente qu'une seule Tg, caractéristique d'un mélange homogène bien compatibilisé, alors que ce TPSiV présente deux Tg très différentes, ce qui témoigne d'un mélange biphasique et donc d'une compatibilisation moins efficace que pour le TPV 2.

En effet et comme illustré sur les clichés des figures 5 et 6, ce TPV 2 présente une morphologie telle que les deux phases thermoplastique A (claire) et élastomère silicone B (foncée) sont co-continues (avec la phase A qui contient des nodules de la phase B de taille moyenne inférieure à 1 µm), et l'on peut voir à la figure 5 que cette dispersion est bien meilleure que celle visible à la figure 6 pour le TPSiV témoin « 1180 », lequel a ses phases A et B qui sont visiblement bien distinctes et très peu compatibilisées.

## Revendications

1. Elastomère réticulé à transformation thermoplastique, comprenant :
- une première phase (A) à base d'au moins un polymère thermoplastique choisi dans le groupe constitué par les homopolymères et copolymères d'oléfines, les polyamides, les polyimides (PI), les polyphtalamides (PPA), les polyéther-imide (PEI), les polyamide-imide (PAI), les élastomères thermoplastiques (TPE) et leurs mélanges, ledit au moins un polymère thermoplastique étant compris dans l'élastomère réticulé à transformation thermoplastique selon une fraction massique allant de 20 % à 80 %,
- une seconde phase (B) à base d'au moins un élastomère silicone liquide bi-composants (B1 et B2) réticulé par hydrosilylation qui comprend un premier composant (B1) comprenant un mélange de diorganopolysiloxanes, une silice renforçante et un catalyseur d'hydrosilylation à base de platine, et un second composant (B2) comprenant un diorganopolysiloxane, un composé organohydridosilicone, une silice renforçante et un inhibiteur, ledit au moins un élastomère silicone liquide étant compris dans l'élastomère réticulé à transformation thermoplastique selon une fraction massique allant de 20 % à 80 %, et
- un système compatibilisant (C) de ces phases entre elles,
**caractérisé en ce que** ledit système comprend :
- au moins un polymère (C1) choisi dans le groupe constitué par les polyoléfines greffées, les terpolymères à blocs poly(vinylaromatique-diène conjugué-méthacrylate de méthyle), les terpolymères à blocs poly(méthacrylate de méthyle-acrylate d'alkyle-méthacrylate de méthyle), les terpolymères éthylène-(meth)acrylate d'alkyle-acide acrylique et les polymères issus d'au moins un glycidyl ester tels que les terpolymères éthylène-(meth)acrylate-glycidyl (meth)acrylate, et
- un polyorganosiloxane (C2) à groupe(s) fonctionnel(s) SiH,
et **en ce que** ledit élastomère réticulé à transformation thermoplastique forme une dispersion homogène desdites première et seconde phases obtenue par extrusion réactive avec au moins la seconde phase qui y est continue, ladite première phase (A) étant une phase discontinue formée de nodules dispersés dans ladite seconde phase (B) continue, ou bien les première et seconde phases étant co-continues dans ledit élastomère réticulé à transformation thermoplastique sous forme de nodules de l'une contenus dans l'autre et inversement, ces nodules présentant dans ces deux cas une taille moyenne inférieure à 10 µm.

2. Elastomère réticulé à transformation thermoplastique selon la revendication 1, **caractérisé en ce que** lesdits nodules présentent dans ces deux cas une taille moyenne comprise entre 50 nm et 5 µm.

3. Elastomère réticulé à transformation thermoplastique selon une des revendications précédentes, **caractérisé en ce qu'**il comprend le produit de la réaction, par extrusion réactive, dudit au moins un polymère thermoplastique et dudit polyorganosiloxane (C2) qui est présent en excès par rapport aux proportions stoechiométriques desdits composants (B1 et B2) et qui présente lesdits groupes fonctionnels SiH, monovalents, à ses extrémités de chaîne ou le long de sa chaîne, ce polyorganosiloxane se greffant par cette réaction sur ledit au moins un polymère thermoplastique.

4. Elastomère réticulé à transformation thermoplastique selon une des revendications précédentes, **caractérisé en ce que** ledit polymère (C1) inclus dans ledit système comprend ladite polyoléfine greffée, laquelle est choisie dans le groupe constitué par les homopolymères et copolymères d'oléfines et les copolymères d'au moins une oléfine et d'au moins un comonomère non oléfinique, et de préférence dans le groupe constitué par les homopolymères d'une alpha-oléfine, tels que les polypropylènes, et les copolymères d'éthylène et d'un amide, et **en ce que** de préférence ladite polyoléfine est greffée par de l'anhydride maléique.

5. Elastomère réticulé à transformation thermoplastique selon une des revendications précédentes, **caractérisé en ce qu'**il comprend ledit système compatibilisant (C) selon une fraction massique allant de 1 % à 30 %, lequel système comprend (en parties en poids pour 100 parties de polymère(s) thermoplastique(s) et d'élastomère(s) silicone(s) liquide(s)) :
- ledit polymère (C1) selon une quantité allant de 0,1 à 10 parties en poids,
- ledit polyorganosiloxane (C2) à groupe(s) fonctionnel(s) SiH selon une quantité allant de 0,1 à 2 parties en poids, et optionnellement
- un plastifiant (C3), tel qu'une huile paraffinique, un plastifiant de type ester, phosphate ou sulfonamide par exemple, selon une quantité allant de 0 à 20 parties en poids.

6. Elastomère réticulé à transformation thermoplastique selon une des revendications précédentes, **caractérisé en ce que** ledit au moins un polymère thermoplastique est choisi dans le groupe constitué par les polypropylènes isotactiques, les copolymères de propylène, les polyéthylènes haute densité, les polyéthylènes basse densité, les copolyesters (COPE), les polyéthers blocs amides (PEBA), les polyamides 6, les polyamides 4.6, les polyamides 6.6, les polyamides 11, les polyamides 12, les polyuréthannes thermoplastiques (TPU) et leurs mélanges.

7. Elastomère réticulé à transformation thermoplastique selon une des revendications précédentes, **caractérisé en ce qu'**il comprend en outre, selon une fraction massique allant de 1 % à 30 %, une charge renforçante (D) de ladite première (A) et/ou de ladite seconde phase (B) qui est choisie dans le groupe constitué par les charges inorganiques telles que les silices pyrogénées hydrophobes, le dioxyde de titane et le talc, les charges organiques telles que le noir de carbone et le graphite, et leurs mélanges.

8. Procédé de préparation d'un élastomère réticulé à transformation thermoplastique selon une des revendications précédentes, **caractérisé en ce qu'**il comprend une extrusion réactive, mise en œuvre en au moins une passe dans une extrudeuse bi-vis (2), d'un mélange comprenant lesdites première et seconde phases (A et B) et ledit système compatibilisant (C).

9. Procédé selon la revendication 8, **caractérisé en ce que** l'on introduit avant ladite seconde phase (B) dans ladite extrudeuse :
- ladite première phase (A),
- ledit système compatibilisant (C), de préférence au moyen d'une pompe péristaltique, et
- une charge renforçante (D) de ladite première et/ou de ladite seconde phase.

10. Procédé selon la revendication 9, **caractérisé en ce que** l'on introduit simultanément, en une zone d'alimentation (1) de ladite extrudeuse (2) :
- ladite première phase (A),
- tout ou partie dudit système compatibilisant (C), et
- une charge renforçante (D) de ladite première et/ou de ladite seconde phase, pour obtenir un pré-mélange que l'on fait réagir ensuite avec optionnellement la partie restante (C3) dudit système, puis avec ladite seconde phase (B).

11. Procédé selon une des revendications 8 à 10, **caractérisé en ce que** l'on mélange ladite seconde phase (B) à ladite première phase (A) par injection, dans une zone de dispersion de ladite extrudeuse (2) :
- d'un premier composant (B1) de cette seconde phase comprenant un mélange de diorganopolysiloxanes, une silice renforçante et un catalyseur d'hydrosilylation à base de platine, puis
- d'un second composant (B2) de cette seconde phase comprenant un diorganopolysiloxane, un composé organohydridosilicone, une silice renforçante et un inhibiteur.

12. Procédé selon une des revendications 8 à 11, **caractérisé en ce que** l'on mélange lesdites première et seconde phases (A et B) dans une zone de dispersion de ladite extrudeuse (2), à une température supérieure d'au moins 20° C au point de fusion dudit polymère thermoplastique ou de celui des polymères thermoplastiques qui est le plus élevé, et avec un taux de cisaillement du mélange dans la zone de dispersion qui est supérieur à 10² s⁻¹ et de préférence égal ou supérieur à 10³ s⁻¹.

13. Procédé selon une des revendications 8 à 12, **caractérisé en ce que** l'on soumet à un traitement thermique le mélange formé de granulés qui est obtenu en sortie de ladite extrudeuse (2), par exemple pendant plusieurs heures à une température comprise entre 100° C et 150° C, pour l'amélioration des propriétés mécaniques de ce mélange, telles que la résistance à la rupture, la résistance au déchirement et la déformation rémanente à la compression.

## Patentansprüche

1. Vernetztes Elastomer mit thermoplastischer Umwandlung, umfassend:
- eine erste Phase (A) auf der Grundlage wenigstens eines thermoplastischen Polymers, gewählt aus der Gruppe, umfassend Olefinhomopolymere und - copolymere, Polyamide, Polyimide (PI), Polyphtalamide (PPA), Polyetherimide (PEI), Polyamidimide (PAI), thermoplastische Elastomere (TPE) und deren Mischungen, wobei das wenigstens eine thermoplastische Polymer in dem vernetzten Elastomer mit thermoplastischer Umwandlung mit einem Massenanteil von 20 % bis 80 % enthalten ist,
- eine zweite Phase (B) auf der Grundlage wenigstens eines flüssigen Zweikomponenten-Silikonelastomers (B1 und B2), das durch Hydrosilylierung vernetzt ist, umfassend eine erste Komponente (B1), umfassend eine Mischung aus Diorganopolysiloxanen, eine verstärkende Kieselsäure und einen platinbasierten Hydrosilylierungskatalysator, und eine zweite Komponente (B2), umfassend ein Diorganopolysiloxan, eine Organohydridosilikonverbindung, eine verstärkende Kieselsäure und einen Inhibitor, wobei das wenigstens eine flüssige Silikonelastomer in dem vernetzten Elastomer mit thermoplastischer Umwandlung mit einem Massenanteil von 20 % bis 80 % enthalten ist, und
- ein untereinander kompatibilisierendes System (C) für diese Phasen,
**dadurch gekennzeichnet, dass** das System umfasst:
- wenigstens ein Polymer (C1), gewählt aus der Gruppe, umfassend gepfropfte Polyolefine, Terpolymere mit Poly(vinylaromat/konjugiertes Dien/Methylmethacrylat)-Blöcken, Terpolymere mit Poly(methyl-alkylmethacrylatmethylacrylat)-Blöcken, Alkylacrylsäure-Ethylen(meth)acrylat-Terpolymere und Polymere, die sich von wenigstens einem Glycidylester wie beispielsweise Ethylen-(meth)acrylat-glycidyl(meth)acrylat-Terpolymeren ableiten, und
- ein Polyorganosiloxan (C2) mit einer funktionellen SiH-Gruppe/funktionellen SiH-Gruppen,
und dadurch, dass das vernetzte Elastomer mit thermoplastischer Umwandlung eine homogene Dispersion der ersten und zweiten Phase bildet, die durch reaktive Extrusion mit wenigstens der kontinuierlichen zweiten Phase darin erhalten wurde, wobei die erste Phase (A) eine diskontinuierliche Phase ist, die aus Knötchen gebildet wird, die in der zweiten kontinuierlichen Phase (B) dispergiert sind, oder wobei die erste und zweite Phase in dem vernetzten Elastomer mit thermoplastischer Umwandlung als Knötchen der einen Phase in der anderen und umgekehrt gemeinsam kontinuierlich sind, wobei diese Knötchen in beiden Fällen eine durchschnittliche Größe von weniger als 10 µm aufweisen.

2. Vernetztes Elastomer mit thermoplastischer Umwandlung nach Anspruch 1, **dadurch gekennzeichnet, dass** die Knötchen in beiden Fällen eine durchschnittliche Größe zwischen 50 nm und 5 µm aufweisen.

3. Vernetztes Elastomer mit thermoplastischer Umwandlung nach einem der vorhergehenden Ansprüche, **dadurch gekennzeichnet, dass** es das Reaktionsprodukt des wenigstens einen thermoplastischen Polymers und des Polyorganosiloxans (C2) durch reaktive Extrusion umfasst, welches über die stöchiometrischen Anteile der Komponenten (B1 und B2) hinaus vorhanden ist und die einwertigen SiH-Funktionsgruppen an seinen Kettenenden oder entlang seiner Kette aufweist, wobei sich das Polyorganosiloxan durch diese Reaktion auf das wenigstens eine thermoplastische Polymer aufpfropft.

4. Vernetztes Elastomer mit thermoplastischer Umwandlung nach einem der vorhergehenden Ansprüche, **dadurch gekennzeichnet, dass** das in dem System enthaltene Polymer (C1) das gepfropfte Polyolefin umfasst, gewählt aus der Gruppe, umfassend Olefinhomopolymere und -copolymere und Copolymere wenigstens eines Olefins und wenigstens eines nicht-olefinischen Comonomers und bevorzugt aus der Gruppe, umfassend Homopolymere eines Alpha-Olefins, wie beispielsweise Polypropylene, und Copolymere des Ethylen und des Amids, und dass bevorzugt das Polyolefin mit Maleinsäureanhydrid gepfropft ist.

5. Vernetztes Elastomer mit thermoplastischer Umwandlung nach einem der vorhergehenden Ansprüche, **dadurch gekennzeichnet, dass** es das kompatibilisierende System (C) mit einem Massenanteil von 1% bis 30 % umfasst, wobei das System (in Gewichtsteilen pro 100 Teile thermoplastische(s) Polymer(e) und Flüssigsilikonelastomer(e)) umfasst:
- das Polymer (C1) in einer Menge von 0,1 bis 10 Gewichtsteilen,
- das Polyorganosiloxan (C2) mit der/den funktionellen SiH-Gruppe(n) in einer Menge von 0,1 bis 2 Gewichtsteilen, und gegebenenfalls
- einen Weichmacher (C3), wie beispielsweise ein paraffinhaltiges Öl, einen Weichmacher vom Ester-, Phosphat- oder Sulfonamid-Typ, in einer Menge von 0 bis 20 Gewichtsteilen.

6. Vernetztes Elastomer mit thermoplastischer Umwandlung nach einem der vorhergehenden Ansprüche, **dadurch gekennzeichnet, dass** das wenigstens eine thermoplastische Polymer gewählt ist aus der Gruppe, umfassend isotaktische Polypropylene, Propylencopolymere, hochdichte Polyethylene, niederdichte Polyethylene, Copolyester (COPE), Polyetherblockamide (PEBA), Polyamide 6, Polyamide 4.6, Polyamide 6.6, Polyamide 11, Polyamide 12, thermoplastische Polyurethane (TPUs) und deren Mischungen.

7. Vernetztes Elastomer mit thermoplastischer Umwandlung nach einem der vorhergehenden Ansprüche, **dadurch gekennzeichnet, dass** es ferner mit einem Massenanteil von 1% bis 30 % einen verstärkenden Füllstoff (D) der ersten (A) und/oder der zweiten Phase (B) umfasst, welcher gewählt ist aus der Gruppe, umfassend anorganische Füllstoffe, wie beispielsweise hydrophobe pyrogene Kieselsäuren, Titandioxid und Talkum, organische Füllstoffen, wie beispielsweise Rußschwarz und Graphit und deren Mischungen.

8. Verfahren zur Herstellung eines vernetzten Elastomers mit thermoplastischer Umwandlung nach einem der vorhergehenden Ansprüche, **dadurch gekennzeichnet, dass** es eine in wenigstens einem Durchgang in einem Doppelschneckenextruder (2) durchgeführte reaktive Extrusion einer Mischung umfasst, welche die erste und zweite Phase (A und B) und das kompatibilisierende System (C) umfasst.

9. Verfahren nach Anspruch 8, **dadurch gekennzeichnet, dass** vor der zweiten Phase (B) in den Extruder eingeführt wird:
- die erste Phase (A),
- das kompatibilisierende System (C), bevorzugt mittels einer peristaltischen Pumpe, und
- eine verstärkende Füllung (D) der ersten und/oder zweiten Phase.

10. Verfahren nach Anspruch 9, **dadurch gekennzeichnet, dass** gleichzeitig in eine Zuführzone (1) des Extruders (2) eingebracht werden:
- die erste Phase (A),
- das gesamte oder ein Teil des kompatibilisierenden Systems (C), und
- eine verstärkende Füllung (D) der ersten und/oder zweiten Phase,
zum Erhalt einer Vormischung, die man dann optional mit dem verbleibenden Teil (C3) des Systems, und anschließend mit der zweiten Phase (8) reagieren lässt.

11. Verfahren nach einem der Ansprüche 8 bis 10, **dadurch gekennzeichnet, dass** die zweite Phase (B) mit der ersten Phase (A) durch Einspritzen in einer Dispersionszone des Extruders (2) vermischt wird:
- eine erste Komponente (B1) dieser zweiten Phase, welche eine Mischung aus Diorganopolysiloxanen, einer verstärkenden Kieselsäure und einem Hydrosilylierungskatalysator auf Platinbasis umfasst, und dann
- eine zweite Komponente (B2) dieser zweiten Phase, die ein Diorganopolysiloxan, eine Organohydridosilikonverbindung, eine verstärkende Kieselsäure und einen Inhibitor umfasst.

12. Verfahren nach einem der Ansprüche 8 bis 11, **dadurch gekennzeichnet, dass** die erste und zweite Phase (A und B) in einer Dispersionszone des Extruders (2) bei einer Temperatur gemischt werden, die wenigstens 20 °C über dem Schmelzpunkt des thermoplastischen Polymers oder dem höchsten Schmelzpunkt der thermoplastischen Polymere liegt, und mit einer Scherrate der Mischung in der Dispersionszone, die größer als 10² s⁻¹ und bevorzugt größer gleich 10³ s⁻¹ ist.

13. Verfahren nach einem der Ansprüche 8 bis 12, **dadurch gekennzeichnet, dass** die aus Granulat gebildete Mischung, die am Ausgang des Extruders (2) erhalten wird, einer Wärmebehandlung unterzogen wird, beispielsweise für mehrere Stunden bei einer Temperatur zwischen 100 °C und 150 °C, um die mechanischen Eigenschaften dieser Mischung, wie Bruchfestigkeit, Reißfestigkeit und verbleibende Druckverformung zu verbessern.

## Claims

1. Thermoplastic elastomer vulcanizate comprising:
- a first phase (A) based on at least one thermoplastic polymer chosen from the group consisting of homopolymers and copolymers of olefins, polyamides, polyimides (Pis), polyphthalamides (PPAs), polyetherimides (PEIs), polyamide-imides (PAIs), thermoplastic elastomers (TPEs) and blends thereof, said at least one thermoplastic polymer being comprised in the thermoplastic elastomer vulcanizate according to a weight fraction ranging from 20% to 80%;
- a second phase (B) based on at least one two-component (B1 and B2) liquid silicone elastomer crosslinked by hydrosilylation which comprises a first component (B1) comprising a mixture of diorganopolysiloxanes, a reinforcing silica and a platinum-based hydrosilylation catalyst, and a second component (B2) comprising a diorganopolysiloxane, an organohydridosilicone compound, a reinforcing silica and an inhibitor, said at least one liquid silicone elastomer being comprised in the thermoplastic elastomer vulcanizate according to a weight fraction ranging from 20% to 80%; and
- a system (C) for compatibilizing these phases together,
**characterized in that** said system comprises:
- at least one polymer (C1) chosen from the group consisting of grafted polyolefins, terpolymers containing poly(vinylaromatic/conjugated diene/methyl methacrylate) blocks, terpolymers containing poly(methyl methacrylate/alkyl acrylate/methyl methacrylate) blocks, ethylene/alkyl-(meth)acrylate/acrylic acid terpolymers and polymers resulting from at least one glycidyl ester such as ethylene/(meth)acrylate/glycidyl (meth)acrylate terpolymers; and
- a polyorganosiloxane (C2) with SiH functional group(s),
and **in that** said thermoplastic elastomer vulcanizate forms a homogeneous dispersion of said first and second phases obtained by reactive extrusion with at least the second phase which is continuous therein, said first phase (A) being a discontinuous phase formed of nodules dispersed in said continuous second phase (B), or else the first and second phases being co-continuous in said thermoplastic elastomer vulcanizate in the form of nodules of one contained in the other and vice versa, these nodules having, in both cases, a mean size of less than 10 µm.

2. Thermoplastic elastomer vulcanizate according to claim 1, **characterized in that** said nodules have in these both cases a mean size of between 50 nm and 5 µm.

3. Thermoplastic elastomer vulcanizate according to either of the preceding claims, **characterized in that** it comprises the product of the reaction, by reactive extrusion, of said at least one thermoplastic polymer and of said polyorganosiloxane (C2) which is present in excess relative to the stoichiometric proportions of said components (B1 and B2) and which has said SiH functional groups, being monovalent, at its chain ends or along its chain, this polyorganosiloxane being grafted by this reaction to said at least one thermoplastic polymer.

4. Thermoplastic elastomer vulcanizate according to one of the preceding claims, **characterized in that** said polymer (C1) included in said system comprises said grafted polyolefin, which is chosen from the group consisting of homopolymers and copolymers of olefins and copolymers of at least one olefin and of at least one non-olefinic comonomer, and preferably from the group consisting of homopolymers of an α-olefin, such as polypropylenes, and copolymers of ethylene and of an amide, and **in that**, preferably, said polyolefin is grafted by maleic anhydride.

5. Thermoplastic elastomer vulcanizate according to one of the preceding claims, **characterized in that** it comprises said compatibilizing system (C) in a weight fraction ranging from 1% to 30%, said system comprises (in parts by weight per 100 parts of thermoplastic polymer(s) and liquid silicone elastomer(s)):
- said polymer (C1) in an amount ranging from 0.1 to 10 parts by weight;
- said polyorganosiloxane (C2) with SiH functional group(s) in an amount ranging from 0.1 to 2 parts by weight; and optionally
- a plasticizer (C3), such as a paraffinic oil, a plasticizer of ester, phosphate or sulfonamide type for example, in an amount ranging from 0 to 20 parts by weight.

6. Thermoplastic elastomer vulcanizate according to one of the preceding claims, **characterized in that** said at least one thermoplastic polymer is chosen from the group consisting of isotactic polypropylenes, copolymers of propylene, high-density polyethylenes, low-density polyethylenes, copolyesters (COPEs), polyether block amides (PEBAs), PA-6 polyamides, PA-4,6 polyamides, PA-6,6 polyamides, PA-11 polyamides, PA-12 polyamides, thermoplastic polyurethanes (TPUs) and blends thereof.

7. Thermoplastic elastomer vulcanizate according to one of the preceding claims, **characterized in that** it comprises, in addition, in a weight fraction ranging from 1% to 30%, a reinforcing filler (D) for reinforcing said first phase (A) and/or said second phase (B) which is chosen from the group consisting of inorganic fillers such as hydrophobic pyrogenic silicas, titanium dioxide and talc, organic fillers such as carbon black and graphite, and mixtures thereof.

8. Process for preparing a thermoplastic elastomer vulcanizate according to one of the preceding claims, **characterized in that** it comprises a reactive extrusion, carried out by at least one pass of a mixture comprising said first and second phases (A and B) and said compatibilizing system (C) through a twin-screw extruder (2).

9. Process according to Claim 8, **characterized in that** introduced into said extruder before said second phase (B) are:
- said first phase (A);
- said compatibilizing system (C), preferably by means of a peristaltic pump; and
- a reinforcing filler (D) for reinforcing said first phase and/or said second phase.

10. Process according to Claim 9, **characterized in that** introduced simultaneously into a feed zone (1) of said extruder (2) are:
- said first phase (A);
- all or part of said compatibilizing system (C); and
- a reinforcing filler (D) for reinforcing said first phase and/or said second phase,
in order to obtain a premix that is then reacted optionally with the remaining part (C3) of said system, then with said second phase (B).

11. Process according to one of Claims 8 to 10, **characterized in that** said second phase (B) is mixed with said first phase (A) by injection, into a dispersion zone of said extruder (2):
- of a first component (B1) of this second phase comprising a mixture of diorganopolysiloxanes, a reinforcing silica and a platinum-based hydrosilylation catalyst; then
- of a second component (B2) of this second phase comprising a diorganopolysiloxane, an organohydridosilicone compound, a reinforcing silica and an inhibitor.

12. Process according to one of Claims 8 to 11, **characterized in that** said first and second phases (A and B) are mixed in a dispersion zone of said extruder (2), at a temperature at least 20°C above the melting point of said thermoplastic polymer or the highest melting point of the thermoplastic polymers, and with a shear rate of the blend in the dispersion zone that is greater than 10² s⁻¹ and preferably greater than or equal to 10³ s⁻¹.

13. Process according to one of Claims 8 to 12, **characterized in that** the blend formed of granules that is obtained at the outlet of said extruder (2) is subjected to a heat treatment, for example for several hours at a temperature between 100°C and 150°C, to improve the mechanical properties of this blend, such as the tensile strength, tear strength and compression set.
